# FASCICULE DE BREVET EUROPEEN

(11) **EP 0 983 833 B1**
(45) Date de publication et mention de la délivrance du brevet: **27.11.2002**
(21) Numéro de dépôt: 99116090.4
(22) Date de dépôt: 17.08.1999
(51) Int. Cl.: B29C 43/38, B29C 43/36, B29C 33/00, B29D 30/52

(54) **Moule pour bandes de roulement plates d'enveloppes de pneumatiques**
Form für flache Reifenlaufflächen
Mould for flat treads of tires

(30) Priorité: 03.09.1998 FR 9811125
(43) Date de publication de la demande: 08.03.2000
(73) Titulaire: PNEU LAURENT, 89200 Avallon (FR)
(72) Inventeur: Mas, Robert, 21320 Pouilly-en-Auxois (FR)
(74) Mandataire: Bauvir, Jacques

(56) Documents cités:
- FR-A- 2 742 377
- US-A- 4 772 194
- PATENT ABSTRACTS OF JAPAN vol. 097, no. 001, 31 janvier 1997 (1997-01-31) & JP 08 238624 A (BRIDGESTONE CORP), 17 septembre 1996 (1996-09-17)
- PATENT ABSTRACTS OF JAPAN vol. 098, no. 009, 31 juillet 1998 (1998-07-31) & JP 10 086163 A (OKURA IND CO LTD), 7 avril 1998 (1998-04-07)
- PATENT ABSTRACTS OF JAPAN vol. 016, no. 384 (M-1296), 17 août 1992 (1992-08-17) & JP 04 125118 A (ISUZU MOTORS LTD), 24 avril 1992 (1992-04-24)

## Description

L'invention concerne un moule pour bandes de roulement d'enveloppes de pneumatiques dites "plates", c'est-à-dire destinées à être moulées à plat, notamment pour le rechapage d'enveloppes de pneumatiques.

L'invention concerne plus particulièrement un moule comportant une première et une deuxième parties moulantes définissant respectivement la surface extérieure et la surface intérieure de la bande de roulement, l'une au moins des parties étant déplaçable entre deux positions correspondant à l'ouverture et à la fermeture du moule.

La publication EP-A-0 403 443 décrit un moule pour bande de roulement, comprenant une première et une deuxième parties moulantes respectivement de définition des surfaces extérieure et intérieure de la bande de roulement, ces parties moulantes délimitant l'espace de moulage de la bande de roulement.
Afin d'assurer une pression suffisante et uniforme sur la bande de roulement, il est nécessaire d'ajuster l'espace de moulage au volume de ladite bande de roulement. Mais la phase de moulage commence généralement avant la fermeture complète du moule, ce qui entraîne des risques de fluage du caoutchouc issu de la bande de roulement entre les deux parties moulantes. Ces zones de caoutchouc « emprisonnées » entre les parties moulantes constituent en sortie de moule, des défauts couramment appelés « bavures » qui nécessitent d'être enlevées manuellement.

La publication JP N°64-77390 présente un moule pour bande de roulement plate permettant de faciliter l'opération d'élimination des bavures sur la bande de roulement. Dans ce moule, sont juxtaposées extérieurement aux bords latéraux de la partie moulante définissant la surface extérieure de la bande de roulement, des cavités de réception d'un éventuel trop plein de caoutchouc. Les bords latéraux présentent, de plus, des faces biseautées afin que les bavures issues du moulage présentent une rainure nette délimitant le contour souhaité de la bande de roulement.
La réalisation d'un tel moule simplifie donc l'opération d'élimination des bavures, mais ne traite pas la source du problème qui consiste à empêcher la formation des bavures. En effet, même avec une opération facilitée d'élimination des bavures, celles-ci constituent une perte de temps et de matière.

Par ailleurs, dans un moule totalement rigide, la dilatation volumique de la bande de roulement au moment de la vulcanisation peut provoquer une augmentation considérable de pression et des détériorations importantes sur certaines parties du moule.

Une solution consiste à réaliser un contrôle de pression permettant, lorsqu'un seuil prédéterminé a été atteint, de laisser les deux parties moulantes s'écarter très légèrement l'une de l'autre, par exemple par une diminution de la pression extérieure exercée sur la partie moulante déplaçable, et ainsi de réaliser une extension de l'espace de moulage dans une direction parallèle à un plan transversal de la bande de roulement. Cependant lors d'une telle expansion, du caoutchouc issu de la bande de roulement peut fluer à l'interface des deux parties moulantes provoquant à nouveau l'apparition de bavures.

L'invention vise à pallier l'ensemble des difficultés précédentes.

Dans la suite, on désignera par « position fermée du moule », la position de fermeture complète du moule et par « position entrouverte du moule », une position du moule faiblement écartée de la position de fermeture du moule dans une direction parallèle à un plan transversal de la bande de roulement, l'expression « faiblement écartée » correspondant à une ouverture du moule de l'ordre de quelques millimètres.

Selon l'invention, le moule pour bandes de roulement plates d'enveloppes de pneumatiques comprend une première et une deuxième parties moulantes définissant respectivement la surface extérieure et la surface intérieure d'une bande de roulement, l'une au moins des parties moulantes étant déplaçable entre deux positions correspondant à l'ouverture et la fermeture du moule, et est tel qu'une des parties moulantes porte au moins un élément déformable élastiquement assurant le moulage des bords longitudinaux de la surface concernée de la bande de roulement et susceptible de réaliser et de maintenir une liaison étanche entre les deux parties moulantes entre la position fermée et une position entrouverte du moule.

Ainsi ce moule permet d'obtenir des bandes de roulement sans bavures entre les parties moulantes, quelle que soit l'origine de ces dernières : issues du moulage à la fermeture du moule ou de la vulcanisation. Bien entendu, pour le fonctionnement optimum du moule, il est important d'avoir une grande précision, telle qu'une tolérance de plus ou moins 1,5%, du volume de caoutchouc entrant dans le moule.

L'invention a donc pour objet un moule réalisant une liaison étanche des parties moulantes grâce à la déformation élastique d'un élément de moulage, lors de la fermeture du moule c'est-à-dire dès le début du moulage, donc avant la fermeture complète du moule et lorsque l'on procède à un léger écartement d'une des parties moulantes au moment de la vulcanisation.

D'autres caractéristiques et avantages de l'invention apparaîtront à la lecture d'un exemple de réalisation d'un moule conforme à l'invention, en référence aux dessins dans lesquels :
- la figure 1 est une coupe transversale partielle du moule en position fermée,
- la figure 2 est une coupe transversale partielle du moule représenté à la figure 1 en position ouverte,
- la figure 3 est une coupe transversale partielle du moule représenté à la figure 1 en position entrouverte.

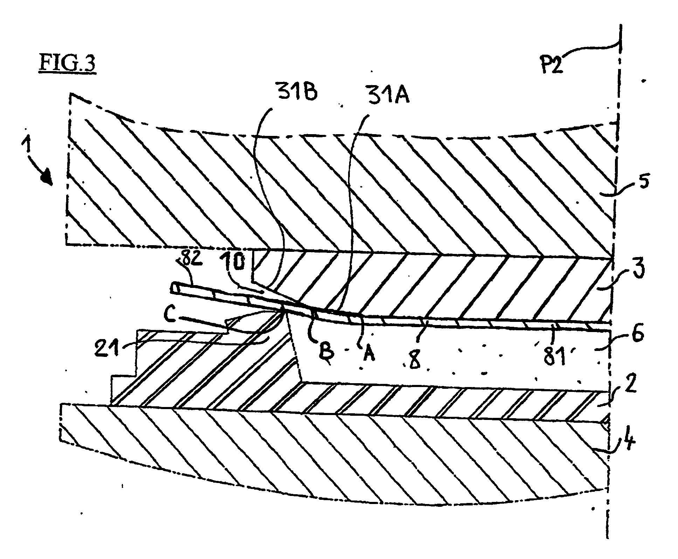

Selon la figure 2, le moule 1 comprend deux parties moulantes 2 et 3 respectivement solidarisées à un plateau de presse inférieur 4 et à un plateau de presse supérieur 5. La première partie moulante inférieure 2 définit la surface extérieure de la bande de roulement alors que la deuxième partie moulante supérieure 3 définit la surface intérieure de la bande de roulement.

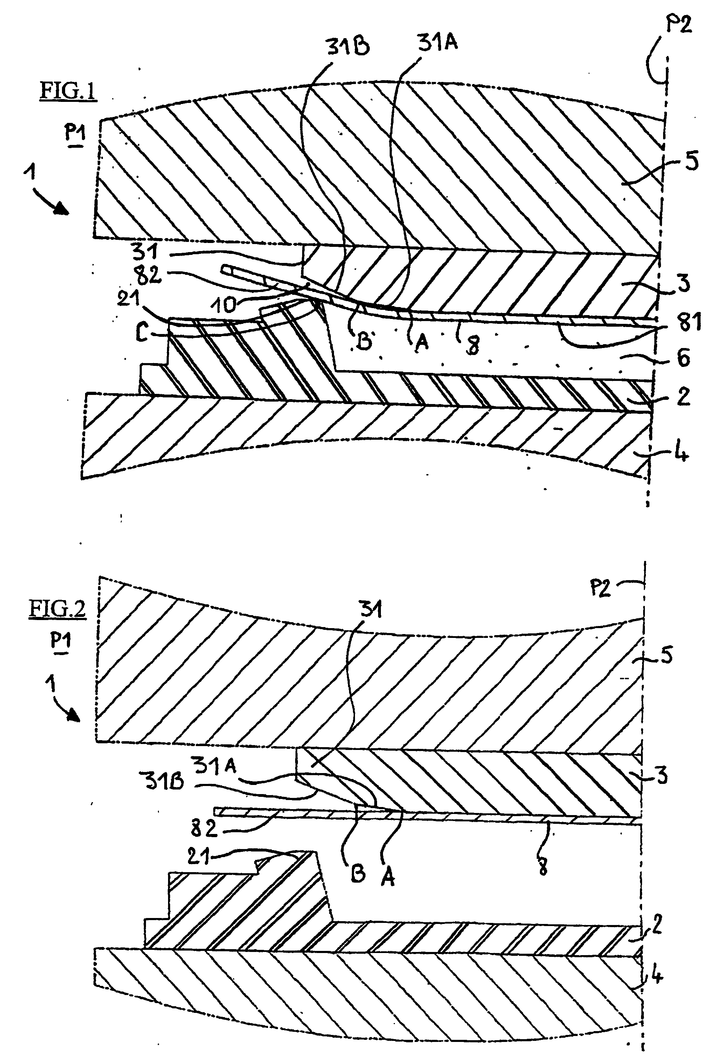

La forme de l'espace de moulage représenté sur la figure 1 correspond au moulage d'une bande de roulement ayant des bords longitudinaux sans « ailes » latérales. Cependant ces formes de moulage sont données à titre d'exemple et ne sauraient constituer une limitation de l'invention, l'invention pouvant, en effet, s'appliquer au moulage de bandes plates de roulement ayant des bords longitudinaux avec ou sans « ailes » latérales et quelle que soit la forme de ces dernières.

Des moyens classiques non représentés, tels que des systèmes vis-écrou, permettant de solidariser chaque partie moulante avec le plateau de presse correspondant, sont répartis régulièrement le long des parties moulantes afin d'assurer une bonne liaison entre lesdits parties moulantes et les plateaux.

De façon avantageuse, on peut réaliser chaque partie moulante sous forme de secteurs jointifs respectivement couplés au plateau correspondant.

Le plateau inférieur 4 est fixe alors que le plateau supérieur 5 est déplaçable parallèlement à un plan transversal P1, c'est-à-dire verticalement sur les figures, afin de permettre l'ouverture et la fermeture du moule par le déplacement de la partie moulante supérieure 3, ainsi que d'atteindre des positions intermédiaires. Pour obtenir le mouvement du plateau supérieur 5, on utilise de façon classique tous moyens appropriés tels que des vérins mécaniques, hydrauliques ou pneumatiques.

Il apparaîtra clairement à la lecture de la suite de la description qu'on peut prévoir indifféremment une partie moulante supérieure fixe et une partie moulante inférieure mobile sans modifier l'agencement ou le principe de fonctionnement de l'invention.

La partie moulante inférieure 2 possède des bords élevés 21 de contact avec la partie moulante supérieure 3.

Le moule 1 étant symétrique par rapport au plan médian longitudinal P2, on se limitera à décrire un des côtés du moule 1 situé à gauche par rapport au plan P2, tel que représenté sur les figures 1 à 3, l'autre côté du moule se déduisant alors aisément par symétrie.

Conformément aux figures 1 et 3, pour chaque bord longitudinal de moulage de la bande de roulement, le moule 1 comporte un élément déformable élastiquement 8 porté par la partie moulante supérieure 3, susceptible de réaliser entre les deux parties moulantes 2 et 3 une liaison étanche en position fermée du moule 1 et de maintenir cette liaison étanche jusqu'à la position entrouverte du moule, que ce soit pendant l'opération de fermeture du moule ou lors de la légère réouverture du moule. Cet élément déformable élastiquement 8 assure, de plus, le moulage des bords longitudinaux de la surface concernée de la bande de roulement.

La disposition d'élément déformable élastiquement au niveau des bords longitudinaux du moule présente l'avantage de ne modifier que très faiblement l'épaisseur des bords longitudinaux de la bande de roulement malgré la variation du volume de la cavité 6.

On pourrait également envisager que les éléments déformables soient portés par la partie moulante inférieure 2, définissant ainsi le moulage des bords longitudinaux de la surface extérieure de la bande de roulement. Cependant la surface extérieure de la bande de roulement nécessitant généralement une grande précision de sculpture, des déformations au niveau des bords longitudinaux de la surface extérieure risqueraient de se transmettre à la zone centrale de ladite surface. Par conséquent, il semble préférable de ne pas modifier le moulage de la surface extérieure de la bande de roulement en rendant mobile, par la présence des éléments déformables 8, une partie de la partie moulante inférieure 2.

L'élément déformable élastiquement se présente (figure 1) sous la forme d'une plaque métallique 8 accolée par sa zone centrale 81 sur la partie moulante 3 et dont l'extrémité latérale longitudinale 82 définit le moulage du bord longitudinal concerné de la surface intérieure de la bande de roulement. On peut également envisager plusieurs éléments déformables rapportés qui constitueraient les extrémités longitudinales de la partie moulante 3 sans la présence d'une zone centrale néanmoins une telle réalisation paraît plus complexe. La liaison entre la plaque 8 et la partie moulante supérieure 3 peut être réalisée, à titre d'exemple, par un simple vissage.

A cet effet la partie moulante supérieure 3 possède un profil qui permet de délimiter avec la plaque 8 un espace de flexion 10 pour ladite plaque à l'extrémité longitudinale de la partie moulante 3. Ce profil présente des bords latéraux longitudinaux biseautés 31, chaque bord 31 possédant deux biseaux successifs 31A et 31B d'inclinaison différente. Les lignes longitudinales correspondant au départ des biseaux, représentées en coupe transversale sur les figures 1 et 2 par les points d'inflexion A et B, sont situées transversalement intérieurement, par rapport au centre du moule, aux bords élevés 21.

Le premier biseau 31A part de la zone centrale 81 à partir du point A (vu en coupe transversale) avec une pente d'environ 5% et le deuxième biseau 31B partant du point B vers l'extérieur du moule possède une pente plus importante que le biseau 31A afin d'éviter tout contact entre l'extrémité 82 de la plaque 8 et la partie moulante 3.

La présence de ces deux biseaux successifs permet de contrôler la courbure de déformation de l'extrémité 82 de la plaque 8, la plaque 8 n'étant liée à la partie moulante 3 que jusqu'au point A, et de minimiser l'effort supporté par la plaque 8 lors de sa déformation, en particulier pour une grande déformation où l'extrémité 82 entre en contact avec les lignes longitudinales comprenant respectivement les points A et B, ces dernières constituent alors des supports pour l'extrémité 82.

Bien entendu, on peut envisager simplement une partie moulante présentant un espace de flexion pour la plaque 8 sans présence de ce type de guidage et support, cependant il est alors nécessaire de choisir un matériau présentant une résistance mécanique et une limite d'élasticité beaucoup plus importante pour constituer la plaque 8.

A titre d'exemple, on peut choisir pour constituer la plaque 8 afin que celle-ci soit susceptible de supporter, élastiquement, une flèche de 4 mm pour une pression de moulage de 60 bars, qui correspond aux pressions de moulage généralement utilisées, un acier ayant une épaisseur moyenne de 3 mm et ayant une résistance mécanique d'environ 2000 MPa et une résistance élastique d'environ 1700 MPa.

En effet, le fluage du caoutchouc de la bande de roulement débute généralement dès le contact de ce dernier avec la partie moulante supérieure qui, selon le type de sculpture et la nature du mélange caoutchouteux utilisé, peut se produire 3 à 4 mm avant la fermeture du moule. En fonction de ces critères, on peut déterminer les caractéristiques du matériau constituant la plaque élastiquement déformable afin qu'elle soit capable d'accepter une flèche correspondant à cette ouverture du moule, généralement cette flèche varie de 1 à 5 mm pour une pression d'environ 60 bars.

La plaque 8 peut être constituée comme on vient de le voir par un matériau métallique mais on peut également envisager l'utilisation d'autres matériaux dans la mesure où ces derniers permettent d'obtenir les déformations élastiques et la résistance souhaitées.

On notera C le point de contact, vu en coupe transversale, du bord élevé 21 de la partie moulante inférieure 2 avec l'extrémité 82 de la plaque 8.

Dans ce qui suit, on décrira succinctement le fonctionnement du moule 1 entre le début du moulage d'une bande de roulement et la fin de la vulcanisation, en référence aux figures 1 et 2 pour un seul bord longitudinal de la bande de roulement. Cependant, il est clair que le fonctionnement du moule de l'autre côté du plan médian longitudinal P2, est symétrique et simultané à celui qui va être décrit.

Cette description sera faite en considérant que le volume du caoutchouc utilisé est situé dans les limites inférieures de la tolérance admise (-1,5%), le fonctionnement pour d'autres volumes, en restant dans les limites de tolérance, se déduisant aisément de ce cas limite.

La hauteur des bords 21 de la partie moulante inférieure 2 est calculée de sorte que pour un volume de caoutchouc dans les limites supérieures de la tolérance, lors du commencement du moulage, la partie d'extrémité 82 de la plaque réalise déjà avec le point C un contact étanche, vu en coupe transversale, la plaque 8 présentant alors une flexion comme on le verra plus en détails dans la suite de la description.

Avant l'opération de fermeture du moule 1, la plaque 8 ne subit aucune contrainte, elles est donc plate, comme le montre la figure 1.

Grâce aux moyens mécanique, hydrauliques ou pneumatiques évoqués précédemment et s'exerçant sur le plateau supérieur 5, on procède à la fermeture du moule 1 en faisant descendre la partie moulante supérieure 3.

Le contact entre l'extrémité 82 de la plaque 8 et le bord de la partie moulante inférieure 2 s'opère alors que le caoutchouc est en contact avec la zone centrale 81 de la plaque mais sans que ce dernier ne soit encore monté en pression de sorte que le caoutchouc ne flue pas aux extrémités du moule 1. Pour que ce contact soit effectivement étanche, il est nécessaire qu'un effort suffisant soit appliqué sur la plaque 8 et que cette dernière subisse une déformation, même avec une flèche très faible. En effet, et la plaque 8, du fait de son élasticité, cherche naturellement à retrouver sa position initiale non déformée et exerce ainsi une pression sur le bord élevé 21 rendant ainsi son contact avec ledit bord 21 étanche. De plus, cette déformation courbant l'extrémité 82 de la plaque 8 vers le haut, les forces de gravité facilitent également le maintien de l'étanchéité du contact entre ladite plaque et le bord 21.

On continue donc à descendre la partie moulante supérieure 3 qui impose alors une contrainte sur la plaque 8 qui se déforme en se courbant à partir de la ligne longitudinale comprenant le point A puis celle comprenant le point B. La ligne de contact, correspondant au point C, entre le bord 21 et l'extrémité 82 constitue la zone de liaison étanche, comme on le voit sur la figure 3.

Lorsque le caoutchouc commence à monter en pression et que le moulage commence, le caoutchouc ne peut donc pas fluer entre les deux parties moulantes 2 et 3.

La partie moulante 3 soumet alors la plaque 8 à un effort supplémentaire pour atteindre la position fermée du moule représentée sur la figure 1 et dans laquelle l'extrémité 82 de la plaque 8 a suivi la pente entre A et B, vu en coupe transversale, et est au contact de la partie moulante supérieure 3 sur toute cette zone, subissant une déformation plus importante que précédemment, au delà du point B vers l'extérieur du moule 1.

Suite à la fermeture du moule 1, le caoutchouc est soumis à une augmentation de température jusqu'à la température de vulcanisation qui peut être de l'ordre de 160°C. Le volume de caoutchouc dans la cavité 6 correspondant sensiblement au volume de ladite cavité, la dilatation du caoutchouc entraîne une augmentation progressive de la pression interne dans la cavité 6.

Au delà d'un seuil de pression donné, on autorise, par tout dispositif approprié, un léger recul de la partie moulante supérieure 3 vers le haut. La nouvelle position entrouverte du moule 1 correspondant au plus à la position de la plaque 8 précédent la fermeture complète du moule 1 réalisant le contact étanche entre les deux parties moulantes 2 et 3, c'est-à-dire la position dans laquelle la plaque 8 avait déjà une première déformation. Cet écartement des parties moulantes 2 et 3 supprime, en partie, la contrainte supplémentaire subie par la plaque 8 qui revient, du fait de son élasticité, vers une position qui se rapproche légèrement de sa position de repos. Dans cet exemple, la position entrouverte du moule 1 peut correspondre à une flèche d'environ 3 mm.

Ainsi tout se passe comme si la plaque 8 suivait le mouvement de recul de la partie moulante supérieure 3 en continuant d'assurer l'étanchéité entre les deux parties moulantes et en réalisant une expansion verticale du volume de la cavité 6 comme le montre la figure 3, sans que le caoutchouc ne puisse fluer entre les deux parties moulantes 2 et 3.

Ainsi la bande de roulement obtenue ne présente aucune bavure dans la zone de jonction des parties moulantes 2 et 3. De plus, cette dernière présente une surface extérieure légèrement concave qui, contrairement à ce que l'on aurait pu imaginer, facilite son application ultérieure sur la carcasse de pneumatique.

## Revendications

1. Moule (1) pour bandes de roulement plates d'enveloppes de pneumatiques, qui comprend une première (2) et une deuxième (3) parties moulantes définissant respectivement la surface extérieure et la surface intérieure d'une bande de roulement, l'une au moins des parties moulantes (3) étant déplaçable entre deux positions correspondant à l'ouverture et la fermeture du moule (1), **caractérisé en ce qu'**une des parties moulantes (3) porte au moins un élément déformable élastiquement (8) assurant le moulage des bords longitudinaux de la surface concernée de la bande de roulement et susceptible, grâce à sa déformation correspondant au déplacement de la zone de liaison (C) portée par ledit élément dans une direction parallèle à un plan transversal (P1) de la bande de roulement, de réaliser et de maintenir une liaison étanche entre les deux parties moulantes (2, 3) entre la position fermée et une position du moule (1) faiblement écartée de la position de fermeture du moule dans une direction parallèle à un plan transversal (P1) de la bande de roulement.

2. Moule selon la revendication 1, dans lequel l'élément déformable élastiquement (8) est porté par la partie moulante (3) définissant la surface intérieure de la bande de roulement.

3. Moule selon l'une quelconque des revendications 1 ou 2, dans lequel l'élément déformable élastiquement (8) est constitué par un matériau métallique.

4. Moule selon l'une quelconque des revendications 1 à 3, dans lequel la partie moulante (3) portant l'élément déformable élastiquement (8), a des bords latéraux longitudinaux biseautés (31) délimitant avec l'élément déformable élastiquement (8) un espace de flexion (10) dudit élément.

5. Moule selon la revendication 4, dans lequel les bords longitudinaux biseautés comprennent deux biseaux successifs (31A, 31B), le biseau (31B) situé extérieurement par rapport au centre du moule (1) possédant une pente supérieure à l'autre biseau (31A).

6. Moule selon l'une quelconque des revendications 4 ou 5, dans lequel l'élément déformable élastiquement (8) est constitué par une plaque de recouvrement de la partie moulante (3) le portant.

## Patentansprüche

1. Formwerkzeug (1) für flache Laufflächen von Reifenmänteln, das ein erstes (2) und ein zweites (3), formgebendes Teil aufweist, die jeweils die Außenoberfläche und die Innenoberfläche einer Lauffläche festlegen, wobei mindestens das eine der formgebenden Teile (3) zwischen zwei Lagen versetzbar ist, die dem Öffnen und dem Schließen des Formwerkzeugs (1) entsprechen, **dadurch gekennzeichnet, daß** eines der formgebenden Teile (3) mindestens ein elastisch verformbares Element (8) trägt, das das Abformen der Längsränder der betroffenen Oberfläche der Lauffläche sicherstellt und dank seiner Verformung, die der Versetzung der Verbindungszone (C) entspricht, die vom genannten Element in einer Richtung parallel zu einer Querebene (P1) der Lauffläche getragen ist, in der Lage ist, eine dichte Verbindung zwischen den beiden formgebenden Teilen (2, 3) zwischen der geschlossenen Lage und einer Lage des Formwerkzeugs (1) herzustellen und aufrechtzuerhalten, die leicht von der Schließlage des Formwerkzeugs in einer Richtung parallel zu einer Querebene (P1) der Lauffläche abgespreizt ist.

2. Formwerkzeug nach Anspruch 1, in dem das elastisch verformbare Element (8) vom formgebenden Teil (3) getragen ist, das die Innenoberfläche der Lauffläche festlegt.

3. Formwerkzeug nach irgendeinem der Ansprüche 1 oder 2, worin das elastisch verformbare Element (8) aus einem metallischen Material gebildet ist.

4. Formwerkzeug nach irgendeinem der Ansprüche 1 bis 3, worin das formgebende Teil (3), das das elastisch verformbare Element (8) trägt, abgeschrägte, seitliche Längsränder (31) aufweist, die zusammen mit dem elastisch verformbaren Teil (8) einen Durchbiegungsraum (10) für das genannte Element begrenzen.

5. Formwerkzeug nach Anspruch 4, worin die abgeschrägten Längsränder zwei aufeinanderfolgende Abschrägungen (31A, 31B) aufweisen, von denen die Abschrägung (31B), die bezüglich der Mitte des Formwerkzeugs (1) außenliegt, eine größere Steigung als die andere Abschrägung (31A) besitzt.

6. Formwerkzeug nach irgendeinem der Ansprüche 4 oder 5, worin das elastisch verformbare Element (8) von einer Platte zum Abdecken des formgebenden Teils (3) gebildet ist, das es trägt.

## Claims

1. A mould (1) for flat treads of tyres, comprising first (2) and second (3) moulding parts respectively defining the outer surface and the inner surface of a tread, at least one of the moulding parts (3) being moveable between two positions corresponding to the opening and closing of the mould (1), **characterised in that** one of the moulding parts bears at least one elastically deformable element (8) ensuring moulding of the longitudinal edges of the,tread surface concerned and capable, due to its deformation corresponding to the displacement of the connection zone (C) borne by said element in a direction parallel to a transverse plane (P1) of the tread, of forming and maintaining a tight connection between the two moulding parts (2, 3) between the closed position and a position of the mould (1) slightly distanced from the closed position of the mould in a direction parallel to a transverse plane (P1) of the tread.

2. A mould according to claim 1, in which the elastically deformable element (8) is borne by the moulding part (3) defining the inner surface of the tread.

3. A mould according to any one of claims 1 or 2, in which the elastically deformable element (8) is made of a metallic material.

4. A mould according to any one of claims 1 to 3, in which the moulding part (3) bearing the elastically deformable element (8) has beveled longitudinal side edges (31) defining with the elastically deformable element (8) a deflection space (10) for said element.

5. A mould according to claim 4, in which the beveled longitudinal edge comprises two successive bevels (31A, 31B), the bevel (31B) located to the outside relative to the centre of the mould (1) having a steeper slope than the other bevel (31A).

6. A mould according to any one of claims 4 and 5, in which the elastically deformable element (8) is formed by a plate which covers the moulding part (3) which bears it.
